# NEUE EUROPÄISCHE PATENTSCHRIFT

(11) **EP 1 358 087 B2**
(45) Veröffentlichungstag und Bekanntmachung des Hinweises auf die Entscheidung über den Einspruch: **17.06.2009**
(45) Hinweis auf die Patenterteilung: 24.05.2006
(21) Anmeldenummer: 02712881.8
(22) Anmeldetag: 01.02.2002
(51) Int. Cl.: B60N 2/235

(54) **BESCHLAG FÜR EINEN FAHRZEUGSITZ**
FITTING FOR A VEHICLE SEAT
ARMATURE DE SIEGE DE VEHICULE

(30) Priorität: 06.02.2001 DE 10105282
(43) Veröffentlichungstag der Anmeldung: 05.11.2003
(73) Patentinhaber: KEIPER GmbH & Co. KG, 67657 Kaiserslautern (DE)
(72) Erfinder: EPPERT, Dietmar, 42857 Remscheid (DE); STILLEKE, Martin, 45657 Recklinghausen (DE); LEHMANN, Ulrich, 53347 Alfter-Bonn (DE)
(74) Vertreter: Patentanwälte Hosenthien-Held und Dr. Held
(86) Internationale Anmeldenummer: PCT/EP2002/001032
(87) Internationale Veröffentlichungsnummer: WO 2002/062614

(56) Entgegenhaltungen:
- EP-A- 0 720 930
- DE-A1- 10 009 038
- DE-T2- 69 600 369
- GB-A- 1 060 922
- GB-A- 1 193 971
- JP-A1- 2001 001 842
- JP-A1- 2001 149 160
- US-A1- 4 634 181
- US-A1- 5 209 637
- US-A1- 5 820 218
- US-A1- 6 095 608
- 'Maschinenelemente', Bd. 14, 1998, C. HANSER VERLAG, MÜNCHEN WIEN, ISBN 3446193820 Artikel K.HEINZ DECKER, Seite 38,55,77

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Aus der EP 0 720 930 A1 ist ein Beschlag dieser Art bekannt, welcher als Neigungseinsteller für die Rückenlehne eines Fahrzeugsitzes vorgesehen ist. Ein radial außen sitzender Ring, dessen Ränder radial nach innen gebogen sind, umgreift die beiden Beschlagteile. Dieser Beschlag könnte aber auch als Einsteller für andere Teile des Fahrzeugsitzes verwendet. Für solche Anwendungszwecke wäre eine vereinfachte und kostengünstigere Herstellung wünschenswert.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, daß das erste Beschlagteil in den Ring eingepresst ist, in der Regel in axialer Richtung, vereinfacht und verbilligt sich die Herstellung des Beschlags, da beim Ring wenigstens auf einer Seite die Ausbildung des Randes entfällt. Vorzugsweise ist der Ring deshalb radial außen angeordnet und umschließt sowohl das erste Beschlagteil als auch das zweite Beschlagteil in Umfangsrichtung. Aufgrund des Einpressens ist eine Vormontage des Beschlags ohne Schweißprozeß möglich, da der Ring den kompletten Beschlag fixiert. In diesem Zustand kann beispielsweise eine Funktionsprüfung erfolgen. Die Haltefunktion ist im Ring integriert, so daß sich durch das Entfallen von Halteblechen eine Gewichtsreduzierung ergibt. Durch einen 360° Schwenkbereich ist ein universeller Einsatz möglich. Die erfindungsgemäße Lösung ist bei gleichem Bauraumbedarf für einen Rastbeschlag, für einen Taumelbeschlag (Getriebebeschlag) oder einen Vorklappmechanismus einsetzbar.

Es ist von Vorteil, wenn der Ring radial innen eine Stufe aufweist, bis zu welcher das erste Beschlagteil eingepresst wird, wobei vorzugsweise das erste Beschlagteil einen größeren Durchmesser in radialer Richtung als das zweite Beschlagteil aufweist. Durch die Stufe ist das Axialspiel des Beschlags einstellbar. Zugleich verhindert die als Dichtstufe wirkende Stufe das Eindringen von Schweißspritzern bei der Endmontage des Beschlags.

Für die Endmontage sind anwendungsangepasste Adapter vorgesehen, mittels welcher der Beschlag an der Struktur des Fahrzeugsitzes befestigt wird. Der dem ersten Beschlagteil zugeordnete Adapter kann einstückig mit dem Ring ausgebildet sein. Erfindungsgemäß werden das erste Beschlagteil, der Ring und der Adapter durch eine einzige, gemeinsame Schweißnaht miteinander verbunden, also beispielsweise drei Bauteile mit einer Laserschweißnaht verbunden. Dies führt zu einer sicheren Verbindung mit minimalem Einsatz von Verbindungsmitteln.

Bei der erfindungsgemäßen Verbindung durch Schweißen ist das Laserschweißen bevorzugt, da dann gezielt und ohne Zusätze die Schweißnaht angebracht werden kann. Das Laserschweißen erfolgt dann vorzugsweise aus der gleichen Richtung wie die Anbringung des jeweiligen Adapters, also in der Regel durch diesen hindurch. Es ist auch möglich, anstelle der Verwendung eines Adapters, beispielsweise anstelle desjenigen Adapters, welcher dem zweiten Beschlagteil zugeordnet ist, das betreffende Beschlagteil direkt an der Struktur anzubringen.

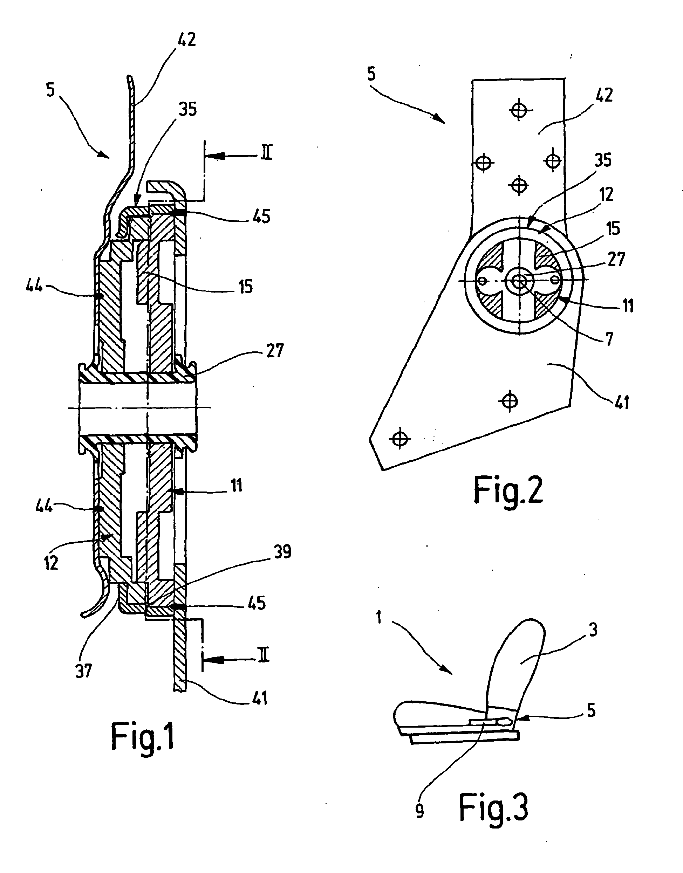

Im folgenden ist die Erfindung anhand eines in der Zeichnung dargestellten Ausführungsbeispiels näher erläutert. Es zeigen
- Fig. 1: einen Schnitt durch das Ausführungsbeispiel,
- Fig. 2: einen Schnitt entlang der Linie II-II in Fig. 1, und
- Fig. 3: einen mit dem Ausführungsbeispiel versehenen Fahrzeugsitz.

Ein Fahrzeugsitz 1 für ein Kraftfahrzeug weist für die Neigungseinstellung seiner Rückenlehne 3 auf seinen beiden Seiten je einen Beschlag 5 auf, der als Rastbeschlag ausgebildet ist, aber auch als Taumelbeschlag ausgebildet sein könnte. Die beiden Beschläge 5 stehen mittels einer Übertragungsstange miteinander in Getriebeverbindung. Ein drehfest auf der Übertragungsstange sitzender Handhebel 9 dient der manuellen Betätigung der Beschläge 5. Die nachfolgenden Richtungsangaben beziehen sich auf das Zylinderkoordinatensystem, welches durch die horizontal und quer zur Fahrtrichtung angeordnete Übertragungsstange definiert ist.

Jeder Beschlag 5 weist als erstes Beschlagteil ein näherungsweise scheibenförmiges Beschlagunterteil 11 und als zweites Beschlagteil ein ebenfalls näherungsweise scheibenförmiges Beschlagoberteil 12 auf. Am später sitzteilfesten Beschlagunterteil 11 sind vier Führungs- und Lagersegmente 15 von näherungsweise viertelskreisförmigem Grundriß angeformt. Die radial nach außen weisenden, um das Zentrum des Beschlagunterteils 11 gekrümmte Umfangsflächen der Führungs- und Lagersegmente 15 bilden zusammen eine vierfach unterbrochene, zylindrisch geformte Lagerfläche für eine entsprechend gekrümmte, radial nach innen weisende Anlagefläche des als Hohlrad ausgebildeten, später lehnenfesten Beschlagoberteils 12. Das Beschlagoberteil 12 ist dadurch in einem entriegelten Zustand relativ zum Beschlagunterteil 11 verdrehbar, und zwar vor dem Einbau in den Fahrzeugsitz 1 um 360°.

Je zwei Führungs- und Lagersegmente 15 bilden ferner eine in radialer Richtung verlaufende Führung für ein radial beweglich angeordnetes Zahnsegment, welches zum Verriegeln des Beschlags 5 mit der auch für die Lagerung vorgesehenen Anlagefläche des Beschlagoberteils zusammen wirkt. Ein nicht näher dargestellter Exzenter, welcher der Bewegung der beiden Zahnsegmente dient, sitzt drehfest auf einem Übertragungselement 27 aus Kunststoff, welches wiederum drehfest auf der Übertragungsstange sitzt. Das Übertragungselement 27 dient mit zwei stirnseitigen Flanschen als Axialsicherung für einen axialen Zusammenhalt der Bestandteile des Beschlags 5 während des Zusammenbaus und gegebenenfalls vor einer Endmontage.

Ein Spannring 35 sitzt auf der radial nach außen weisenden Umfangsfläche des Beschlagunterteils 11 und des Beschlagoberteils 12. Auf seiner vom Beschlagunterteil 11 abgewandten Stirnseite weist der Spannring 35 einen umgebördelten Rand 37 auf, welcher das Beschlagoberteil 12 in axialer Richtung sichert. In radialer Richtung ist zwischen dem Beschlagoberteil 12 und dem Spannring 35 etwas Spiel vorgesehen, um eine ungehinderte Drehbewegung des Beschlagoberteils 12 zu ermöglichen. Das Beschlagunterteil 11 weist einen etwas größeren Außenradius auf als das Beschlagoberteil 12, steht also in radialer Richtung etwas über das Beschlagoberteil 12 über. Am Spannring 35 ist auf seiner Innenmantelfläche im Übergangsbereich zwischen den beiden Beschlagteilen 11 und 12 eine entsprechende ringförmige Dichtstufe 39 in der Art eines Absatzes vorgesehen, wobei der Innenradius des Spannrings 35 im Bereich des Beschlagunterteils 11 mit den gewählten Toleranzen vor dem Zusammenbau nicht größer ist als der Außenradius des Beschlagunterteils 11.

Beim Zusammenbau des Beschlags 5 wird nach Einbringen der oben genannten, für die Verriegelung erforderlichen Bauteile zwischen Beschlagunterteil 11 und Beschlagoberteil 12 als einer der letzten Prozeßschritte der Spannring 35 über das Beschlagoberteil 12 geschoben und das Beschlagunterteil 11 bis zu der als Axialanschlag wirkenden Dichtstufe 39 in axialer Richtung in den Spannring 35 eingepresst, so daß eine feste Verbindung entsteht. Der Beschlag 5 kann nun ohne Schaden transportiert werden. Für seinen späteren Einsatz wird aber vorzugsweise bereits jetzt ein bestimmungsgemäß angepasster unterer Adapter 41 und ein bestimmungsgemäß angepasster oberer Adapter 42 am Beschlag 5 angebracht. Der obere Adapter 42 wird durch Laserschweißverbindungen 44 am Beschlagoberteil 12 auf der in axialer Richtung vom Beschlagunterteil 11 abgewandten Stirnseite befestigt. Der untere Adapter 41 wird in axialer Richtung an das Beschlagunterteil 11 auf der vom Beschlagoberteil 12 abgewandten Seite angelegt. Eine ringförmige Laserschweißnaht 45 zum Verbinden wird aus der gleichen Richtung kommend durch das Material des unteren Adapters 41 hindurch genau entlang des Außenradius des Beschlagunterteils 11 angebracht, also zugleich am Spannring 35 entlang geführt. Mit einem Schweißvorgang werden dadurch drei Bauteile fest verbunden, nämlich das Beschlagunterteil 11, der Spannring 35 und der untere Adapter 41.

### Bezugszeichenliste

- 1: Fahrzeugsitz
- 3: Rückenlehne
- 5: Beschlag
- 9: Handhebel
- 11: erstes Beschlagteil, Beschlagunterteil
- 12: zweites Beschlagteil, Beschlagoberteil
- 15: Führungs- und Lagersegment
- 27: Übertragungselement
- 35: Spannring
- 37: Rand
- 39: Dichtstufe
- 41: unterer Adapter
- 42: oberer Adapter
- 44: Laserschweißverbindung
- 45: Laserschweißnaht

## Patentansprüche

1. Beschlag für einen Fahrzeugsitz, insbesondere für einen Kraftfahrzeugsitz, mit einem ersten Beschlagteil (11), mit einem relativ zum ersten Beschlagteil (11) verdrehbaren zweiten Beschlagteil (12), einem Ring (35), welcher die beiden Beschlagteile (11, 12) in axialer Richtung zusammenhält, und einem fest mit dem ersten Beschlagteil (11) verbundenen Adapter (41) zur Befestigung des Beschlags (5) an der Struktur des Fahrzeugsitzes (1), **dadurch gekennzeichnet, dass** das erste Beschlagteil (11) in den Ring (35) eingepresst ist, und dass das erste Beschlagteil (11), der Ring (35) und der Adapter (41) durch eine einzige, gemeinsame Schweißnaht miteinander verbunden sind.

2. Beschlag nach Anspruch 1, **dadurch gekennzeichnet, dass** der Ring (35) sowohl das erste Beschlagteil (11) als auch das zweite Beschlagteil (12) radial außen in Umfangsrichtung umschließt.

3. Beschlag nach Anspruch 2, **dadurch gekennzeichnet, dass** das erste Beschlagteil (11) einen größeren Durchmesser in radialer Richtung als das zweite Beschlagteil (12) aufweist.

4. Beschlag nach Anspruch 2 oder 3, **dadurch gekennzeichnet, dass** der Ring (35) radial innen eine Stufe (39) aufweist, bis zu welcher das erste Beschlagteil (11) eingepresst ist.

5. Beschlag nach einem der Ansprüche 1 bis 4, **dadurch gekennzeichnet, dass** das erste Beschlagteil (11), der Ring (35) und der Adapter (41) mit einer einzigen, gemeinsamen Laserschweißnaht verbunden sind.

6. Beschlag nach Anspruch 5, **dadurch gekennzeichnet, dass** die Laserschweißnaht von der vom zweiten Beschlagteil (12) abgewandten Seite des Beschlags (5) her angebracht ist.

7. Fahrzeugsitz (1) mit einer Rückenlehne (3), **gekennzeichnet durch** einen Beschlag (5) nach einem der Ansprüche 1 bis 6 zur Neigungseinstellung der Rückenlehne (3).

## Claims

1. Fitting for a vehicle seat, in particular for a motor vehicle seat, having a first fitting part (11), having a second fitting part (12) which can be rotated relative to the first fitting part (11), having a ring (35) which holds the two fitting parts (11, 12) together in the axial direction, and having an adapter (41) connected fixedly to the first fitting part (11) for fastening the fitting (5) to the structure of the vehicle seat (1), **characterized in that** the first fitting part (11) is pressed into the ring (35), and that the first fitting part (11), the ring (35) and the adapter (41) are connected to one another by a single, common weld seam.

2. Fitting according to Claim 1, **characterized in that** the ring (35) encloses both the first fitting part (11) and the second fitting part (12) radially to the outside in the circumferential direction.

3. Fitting according to Claim 2, **characterized in that** the first fitting part (11) has a larger diameter in the radial direction than the second fitting part (12).

4. Fitting according to Claim 2 or 3, **characterized in that** the ring (35) has, radially inwards, a step (39) with the first fitting part (11) pressed in as far as it.

5. Fitting according to one of Claims 1 to 4, **characterized in that** the first fitting part (11), the ring (35) and the adapter (41) are connected to one another by a single, common laser weld seam.

6. Fitting according to Claim 5, **characterized in that** the laser weld seam is applied from that side of the fitting (5) which faces away from the second fitting part (12).

7. Vehicle seat (1) having a backrest (3), **characterized by** a fitting (5) according to one of Claims 1 to 6 for adjusting the inclination of the backrest (3).

## Revendications

1. Armature pour un siège de véhicule, en particulier pour un siège de véhicule automobile, avec une première partie d'armature (11), avec une deuxième partie d'armature (12) capable de tourner par rapport à la première partie d'armature (11), avec une bague (35), laquelle maintient ensemble en direction axiale les deux parties d'armature (11, 12), et un adaptateur (41) relié solidement avec la première partie d'armature (11) pour la fixation de l'armature (5) sur la structure du siège de véhicule (1), **caractérisée par le fait que** la première partie d'armature (11) est enfoncée dans la bague (35), et que la première partie d'armature (11), la bague (35) et l'adaptateur (41) sont reliés entre eux de façon solidaire par une unique soudure commune.

2. Armature selon la revendication 1, **caractérisée par le fait que** la bague (35) entoure radialement vers l'extérieur dans la direction périphérique non seulement la première partie d'armature (11) mais encore la deuxième partie d'armature (12).

3. Armature selon la revendication 2, **caractérisée par le fait que** la première partie d'armature (11) présente un diamètre dans la direction radiale plus grand que la deuxième partie d'armature (12).

4. Armature selon l'une des revendications 2 ou 3, **caractérisée par le fait que** la bague (35) présente radialement vers l'intérieur un gradin (39) jusqu'auquel est enfoncée la première partie d'armature (11).

5. Armature selon l'une des revendications 1 à 4, **caractérisée par le fait que** la première partie d'armature (11), la bague (35) et l'adaptateur (41) sont reliés entre eux de façon solidaire par une unique soudure commune au laser.

6. Armature selon la revendication 5, **caractérisée par le fait que** la soudure au laser est appliquée du côté de l'armature (5) tourné à l'opposé de la deuxième partie d'armature (12).

7. Siège de véhicule (1) avec un dossier (3), **caractérisé par** une armature (5) telle que définie à l'une des revendications 1 à 6 pour le réglage de l'inclinaison du dossier (3).
